# EUROPEAN PATENT APPLICATION

(11) **EP 2 565 172 A1**
(43) Date of publication of application: **06.03.2013**
(21) Application number: 11179290.9
(22) Date of filing: 30.08.2011
(51) Int. Cl.: C04B 24/16, C04B 24/26, C04B 28/02, C04B 103/30

(54) **Mid-range water reducers (MRWR) for concretes**

(71) Applicant: Sika Technology AG, 6340 Baar (CH); Sika Mexicana SA de CV, 76920 Corregidora / Querétaro (MX)
(72) Inventor: Bürge, Christian, 5503 Schafisheim (CH); Peter, André, 8307 Effretikon (CH); López-González, Waltter, 76000 Querétaro, Qro. C.P. (MX); Mora-Martínez, Manuel, 76116 Querétaro, Qro C. P. (MX); García, Porfirio, 76900 Corregidora, Qro C. P. (MX); González-Ortega, David, 38400 Valle de Santiago, Gto. (MX)
(74) Representative: Sika Patent Attorneys

(57) **Abstract**

Water-reducing admixture for concrete, comprising a first composition comprising at least one calcium lignosulfonate; and a second composition comprising at least one vinyl-copolymer, and at least one sugar.

## Description

### Technical Field

The present invention is directed to chemical admixtures for the ready mix concrete industry. In particular, the present invention is directed to a water-reducing admixture for concrete and the use of such an admixture for reducing the water consumption in the preparation of a concrete. Further, the invention is directed to a method for preparing a concrete and to a concrete prepared according to this method.

### Prior Art

The present invention seeks to offer a solution for the ready mix concrete industry which is suffering the consequences of using not washed crushed aggregates with high amount of fines. The traditional solution was to wash the aggregates to eliminate the fines content. However, at present, the aggregate and ready mix industries are under a high pressure to be more sustainable and save water, especially in large regions of the world where water is scarce and therefore the ready mix concrete industry has been pushed to use not washed crushed aggregates with high amount of fines to produce concrete. The consequence of this current situation is that it is becoming increasingly difficult each time it is more difficult to produce concrete of high quality with those kinds of aggregates. Accordingly, the ready mix industry is seeking a new admixture technology to help them to solve this issue. Their goal is to have a new generation of admixture to help them to produce high quality concrete with low cement content per cubic meter and using not washed crushed aggregates with high amount of fines.

In order to provide such a solution for the ready mix concrete industry, a number of approaches have been described in the prior art.

The traditional approach is to wash the aggregates to reduce the percentage of fines passing 200 mesh (corresponding to 125 microns) below 5% (based on the total weight of the aggregates). This approach is reflected in the ASTM C-33 standard.

A second prior art approach is the use of clay inhibitors. Various admixtures have been described with the purpose to inhibit the swelling clays contained in some of the aggregates fines used by the ready mix concrete industry. Their aim was to inhibit the swelling clays and by this way reduce the possibility to lose part of the active part of the dispersers (plasticizers or superplasticizers) contained in their admixtures due to their intercalation in the clay-particles when they swell.

A further prior art approach is the pre-treatment of the crushed aggregates with high amount of fines. In this approach, the idea is to spray a chemical compound on the aggregates with the goal to inhibit the negative effects of the aggregate-fines in concrete. This approach is being tested by some ready mix companies at present.

A further prior art approach is the usage of calcium lignosulfonate base admixtures with retarders and air entrainments. This is the current solution of choice in the MRWR (Mid Range Water Reducing) ready mix concrete market dealing with not washed crushed aggregates with high content of fines. This solution provides water-reductions in the order of 10-14%, and keeps the workability of the samples with a mixture effect of setting time retarders and air entrained agents added to the calcium lignosulfonate.

All prior art approaches described above are associated with clear disadvantages.

The traditional approach is not sustainable nowadays in vast regions of the world where water is scare and the priority is to use it for human consumption. The aggregate and ready mix concrete industries are under a high pressure to improve its sustainability and this traditional approach is not the response they are looking for.

In the prior art approach associated with the usage of clay inhibitors, some very effective swelling clay inhibitors have been found. However, the price/performance of those solutions has not been attractive for the ready mix concrete industry, mainly because in that very competitive market, they are expecting to offset the price of the admixture by a significant increase in strength performance, giving them the opportunity to save money by reducing the amount of cement in the concrete mix but keeping the same compressive strengths in the end. The cost/performance goal was not achieved with these solutions - among other reasons- because the increase in compressive strengths has not been enough to offset the cost of the admixture.

The prior art approach to pretreat the crushed aggregates with high amounts of fines has also been found to be associated with clear disadvantages. The irruption of this approach in the MRWR market reflects the lack of a cost/performance solutions coming from the chemical admixture industry. Albeit this approach is a promising idea, there are still clear doubts concerning the question how effective this approach is in terms of the cost/performance relation. In particular, these doubts concern the following issues:
- The solution does not seem to be robust enough to be used with different types of blended cements.
- The solution does not seem to be robust enough to be used with different types of aggregates (natural or manufactured) with different amounts of fines.
- It has not been shown that this solution is capable to produce a significant increase in compressive strengths to offset the cost of the admixture by reducing the amount of cement in the concrete with no negative effect in the strengths.

The prior art approach of the usage of calcium lignosulfonate admixtures with retarders and air entrainment agents has also been found to be associated with several disadvantages. Even thought this approach is the current MRWR cost/performance solution of choice, the MRWR market is demanding a better solution to reduce even further the cement content of concretes made with not washed crushed aggregates with fines content above 5% (based on the total weight of aggregates). They want this, mainly because they want to have a solution to help them compete with other materials different from concrete, which are being pushing down the prices. One way to do that is by demanding a more efficient MRWR solution, capable of reducing the mixing water more than 15% and giving significant improvements in compressive strength without compromising the concrete quality. The current technology based on lignosulfonates has failed to provide more efficient admixtures. It seems that this technology has achieved its limit at 14% of water reduction, 7-9 hrs of initial setting time and 4-6% of air content.

### Disclosure of the Invention

Therefore, the object underlying the present invention is to provide in admixture for concrete which overcomes the above-mentioned disadvantages of the prior art approaches. In particular, the object underlying the present invention is to provide water-reducing admixtures for concrete which are robust to changes of the blended cement sources as well as the type of not washed sub-standard aggregates and at the same time allow the lowering of the air content of the concretes. A further object underlying the present invention is to provide water-reducing admixtures for concrete which are superior in their relation of cost and performance when compared to the approaches described in the prior art.

This object is solved by a water-reducing admixture for concrete, comprising a first composition comprising at least one calcium lignosulfonate; and a second composition comprising at least one vinyl-copolymer, and at least one sugar, in particular glucose.

In a preferred embodiment, the first composition additionally comprises at least one amine, in particular triethanolamine.

In a further preferred embodiment, the at least one vinyl-copolymer of the second composition comprises a substantially water soluble linear copolymer of monomeric units selected from vinyl acetate and vinyl alcohol with monomeric units of N-substituted maleamic acid in a molar ratio of 1:1, said copolymer represented by Formular (A) 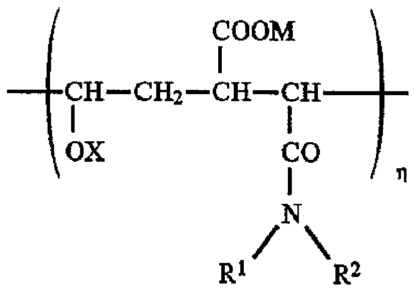 wherein R¹ is hydrogen, R² is an unsubstituted C1 to C4-alkyl residue, a C1 to C10-alkyl residue which comprises an alkali metal carboxylate or alkaline earth metal carboxylate group, or a hydroxyl or amino group, an aromatic residue which comprises carboxylic acid or sulfonic acid groups or alkali metal carboxylate or sulfonate or alkaline earth metal carboxylate or sulfonate groups, or may together with the nitrogen atom to which they bond, form a morpholine ring; X represents a hydrogen atom or the group-COCH₃; and M represents a hydrogen atom, a monovalent or divalent metal ion, or a substituted or unsubstituted ammonium group.

The above-mentioned vinyl-copolymers and their preparation are described in detail in US 5,633,310.

The vinyl-copolymers described above are prepared by polymerizing vinylacetate and maleamic acid or its N-substituted derivatives in presence of a radical producing initiator.

Copolymers of vinyl acetate and maleamic acids form strictly alternating chains and may have wide-ranging weight average molecular weights, in the range of 1,000 to 200,000, more preferably from 10,000 to 100,000.

Examples of monomers which can be used to prepare the vinyl-solfo-polymer include half amides of maleic acid, prepared by the reaction of maleic anhydride with glycine, glutamic acid, alanine, proline, anthranilic acid or by the reaction of maleic anhydride with sulfanilic acid, amino-toluene sulfonic acid, naphthylamine-monosulfonic acid or naphthylamine disulfonic acid and the halfamides obtained by the reaction of maleic anhydride with N-propylamine, N-butylamine, morpholine or amino alkanoles.

In a particularly preferred embodiment, the vinyl-copolymer is represented by the formula

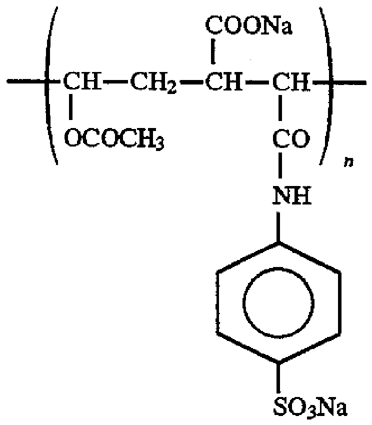

For the purpose of this application, the compound represented by the formula 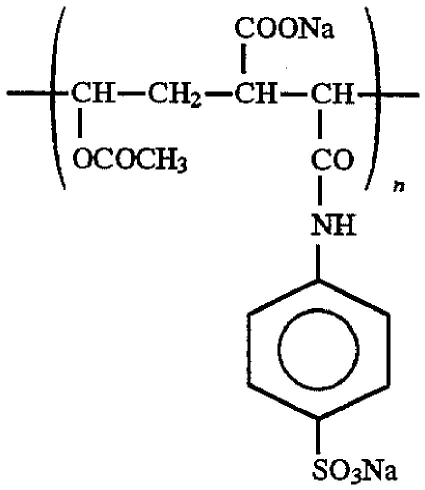 shall be designated as compound (A).

In a preferred water-reducing admixture according to the present invention the first composition additionally comprises at least one sugar, in particular corn-syrup and/or glucose, at least one alkaline compound, in particular sodium hydroxide, at least one preservative, and at least defoamer.

In a particularly preferred water-reducing admixture according to the present invention the first composition additionally comprises sodium gluconate.

A particular preferred water-reducing admixture according to the present invention comprises a first composition comprising
about 50 to 100 wt.-%, preferably about 50 to 95 wt.-%, in particular preferred about 85 wt.-% of at least one calcium-ligno-sulfonate,
about 0 to 5 wt.-%, preferably about 1 to 5 wt.-%, in particular preferred about 3 wt.-% of at least one amine, in particular triethanolamine,
about 0 to 10 wt.-%, preferably about 3 to 10 wt.-%, in particular preferred about 8 wt.-% of at least one sugar, in particular corn-syrup and/or glucose,
about 0 to 3 wt.-%, preferably about 0.1 to 3 wt.-%, in particular preferred about 1 wt.-% of at least one alkaline compound, in particular sodium hydroxide
about 0 to 3 wt.-%, preferably about 0.1 to 3 wt.-%, in particular preferred about 1 wt.-% of at least one preservative, and about 0 to 3 wt.-%, preferably about 0.1 to 3 wt.-%, in particular preferred about 1 wt.-% of at least one defoamer; and
a second composition comprising
about 10 to 90 wt.%, preferably about 15 to 80 wt.-%, in particular preferred about 30 wt.-% of at least one vinyl-copolymer, and about 10 to 90 wt.-%, preferably about 20 to 85 wt.-%, in particular preferred about 70 wt.-% of at least one sugar, in particular glucose.

The present invention is further directed to the use of an admixture as described above for the reduction of the water consumption in the preparation of a concrete.

The present invention is further directed to a use as described above whereby the concrete is a concrete with a cement content ≤ 250 kg/m³ and a content of fines including swelling clays passing 200 mesh (corresponding to 125 microns) ≥ 2%, based on the weight of the total concrete.

The present invention is also directed to a method for preparing a concrete comprising the steps: admixing a concrete mix with a first aqueous composition comprising water and at least one calcium lignosulfonate; and admixing the mix obtained with a second aqueous composition comprising water, at least one vinyl-copolymer, and at least one sugar, in particular glucose.

In a preferred embodiment of the method according to the present invention, the first aqueous composition comprises about 60 to 99 wt.-%, in particular about 80 to 95 wt.-%, and further preferred about 90 wt.-% of the total amount of water used for preparing the concrete, and the second aqueous composition comprises about 1 to 40 wt.-%, in particular about 5 to 20 wt.-%, further preferred about 10 wt.-% of the total amount of water used for preparing the concrete.

In a preferred embodiment of the method according the present invention, the first aqueous composition additionally comprises an amine, in particular triethanolamine.

In a further preferred method according to the present invention, the at least one vinyl-copolymer in the second aqueous composition comprises a substantially water soluble linear copolymer of monomeric units selected from vinyl acetate and vinyl alcohol with monomeric units of N-substituted maleamic acid in a molar ratio of 1:1, said copolymer represented by Formular (A) 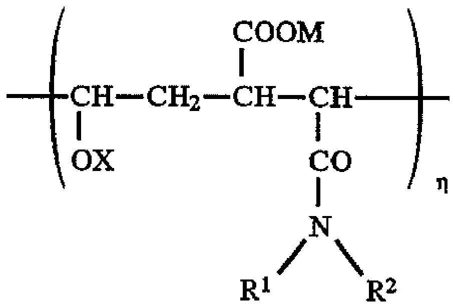 wherein R¹ is hydrogen, R² is an unsubstituted C1 to C4-alkyl residue, a C1 to C10-alkyl residue which comprises an alkali metal carboxylate or alkaline earth metal carboxylate group, or a hydroxyl or amino group, an aromatic residue which comprises carboxylic acid or sulfonic acid groups or alkali metal carboxylate or sulfonate or alkaline earth metal carboxylate or sulfonate groups, or may together with the nitrogen atom to which they bond, form a morpholine ring; X represents a hydrogen atom or the group-COCH₃; and M represents a hydrogen atom, a monovalent or divalent metal icon, or a substituted or unsubstituted ammonium group.

In a particularly preferred embodiment, the vinyl-copolymer comprises the compound represented by the formula

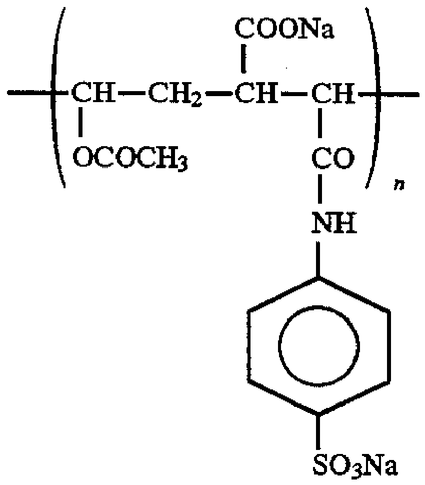

In a further preferred method according the present invention, the first aqueous composition additionally comprises at least one sugar, in particular corn-syrup and/or glucose, at least one alkaline compound, in particular sodium hydroxide, at least one preservative, and at least one defoamer.

In a particularly preferred water-reducing admixture according to the present invention the first composition additionally comprises sodium gluconate.

In a particularly preferred method according to the present invention, the first aqueous composition additionally comprises sodium gluconate.

In a particularly preferred method according the present invention, the first aqueous composition comprises
about 50 to 100 parts per weight, preferably about 50 to 95 parts per weight, in particular preferred about 85 parts per weight of at least one calcium-ligno-sulfonate,
about 0 to 5 parts per weight, preferably about 1 to 5 parts per weight, in particular preferred about 3 parts per weight of at least one amine, in particular triethanolamine,
about 0 to 10 parts per weight, preferably about 3 to 10 parts per weight, in particular preferred about 8 parts per weight of at least one sugar, in particular corn-syrup and/or glucose,
about 0 to 3 parts per weight, preferably about 0.1 to 3 parts per weight, in particular preferred about 1 parts per weight of at least one alkaline compound, in particular sodium hydroxide
about 0 to 3 parts per weight, preferably about 0.1 to 3 parts per weight, in particular preferred about 1 parts per weight of at least one preservative, and
about 0 to 3 parts per weight, preferably about 0.1 to 3 parts per weight, in particular preferred about 1 parts per weight of at least one defoamer; and
the second aqueous composition comprises
about 10 to 90 parts per weight, preferably about 15 to 80 parts per weight, in particular preferred about 30 parts per weight of at least one vinyl-copolymer, and
about 10 to 90 parts per weight, preferably about 20 to 85 parts per weight, in particular preferred about 70 parts per weight of at least one sugar, in particular glucose.

The present invention also directed to a concrete prepared according to the method described above.

In a preferred embodiment, the concrete prepared according to the method of the invention is a concrete with a cement content ≤ 250 kg/m³ and a content of fines including swelling clays passing 200 mesh (corresponding to 125 microns) ≥ 2 %, based on the weight of the total concrete.

In a particular preferred embodiment, the water-reducing admixture for concrete has the following composition:

| **Basic formula of first composition** | **% weight cement base (dry base)** |
|---|---|
| Sodium Hydroxide | 0.5 |
| Triethanolamine | **2.9** |
| Glucose | **10.8** |
| Calcium Lignosulfonate | **36.1** |
| Adicide 50 / Preventol WB (Antibacterial) | 0.6 |
| Defoamer | 0.3 |

| **Basic Formula of second composition** | **% weight cement base (dry base)** |
|---|---|
| **31 wt.-% solution of compound (A) * in** | **22.6** |
| **water** | |
| Glucose | **19.7** |

| | |
|---|---|
| * For the purpose of this application, the compound represented by the formula | |

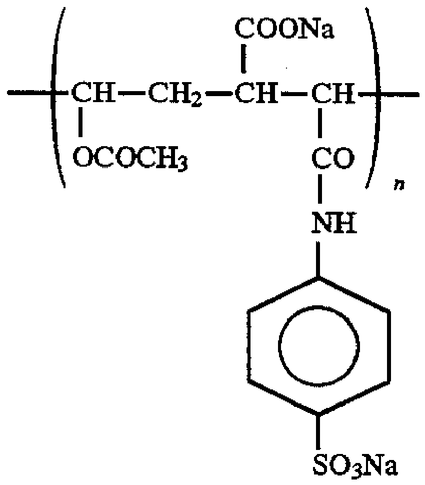

shall be designated as compound (A).

The present inventors have found that the solution according to the present invention, i.e. the water-reducing admixture according to the present invention, the use of this admixture for reducing the water consumption in the preparation of the concrete, the method for preparing a concrete according to the present invention and the concrete prepared by the method according to the present invention provides several surprising advantages over the prior art. These surprising advantages are:
1. Robustnesses: The solution invented has shown to be robust to changes of the blended cement sources, as well as the type of not washed sub-standard aggregates (natural river sands and industrial crushed sands) with fines passing 200 mesh (corresponding to 125 microns) above 5% (based on the total weight of the aggregates).
2. Low air content: The solution invented produces lower air content than the current solution of choice based on lignosulfonate + retarders + air entrainment agents. This feature is important because less air content means higher strength development and in polished concrete applications, a low air content is desired to avoid scaling.
3. Competitive cost/performance vs the current solution of choice: The invented solution has a competitive cost/performance advantage because the price of the solution can be offset by reducing the cement content in the concrete, without loosing neither compressive strengths nor workability in the end. This is something that was not possible to achieve with other solutions like the use of admixtures based on polycarboxylate polymers (PCE).

The solution according to the present invention satisfies a long standing need in that the ready mix concrete was under pressure to use not washed sub-standard aggregates with high content of fines and at the same time to reduce the cement content without lowering quality standards. Specifically, the present invention satisfies the longstanding need of the ready mix concrete industry in countries with limited water supply.

The solution provided by the present invention is in several ways contrary to the teaching of the prior art in that in the prior art the solutions developed to reduce the water consuption without loosing workability were focused on testing the capability of natural substances or synthetic polymers to disperse the cement minerals and therefore those solutions gave a competitive cost/performance advantage in concretes with high cement contents. However, those same solutions did not deliver competitive cost/performance advantages in concretes with cement content below 250 Kg/m3 made with sub-standard aggregates with fines content above 5% (based on the total weight of aggregates). This invention was developed by screening many chemical substances with the fines of different aggregates. The idea was to focus on the capability of different substances to disperse not only the cement part of a concrete but also the part of concrete represented by the aggregate fines. A crucial part of this invention was the idea to find a polymer capable to disperse both the cement and the fines of the sub-standard aggregates. Once a polymer was found, the next step was to find the right blend of retarders to align the solution with the setting time characteristics of the current solution of choice. Another key finding of this invention was the right way to add the solution into the system to maximize the synergistic effect of both admixtures.

The present invention will be further illustrated by the following nonlimiting examples.

### Examples

In the examples, concretes prepared by the admixtures according to the present invention were compared with concretes by use of admixtures known from the prior art.

As admixtures according to the present invention, the compositions AL-099-1, AL-099-2 and AL-099-3 have been used, which are described below in Tables 1 to 3.

**Table 1: Composition of the AL-099-1**

| | |
|---|---|
| AL-099-1 % weight cement base (dry base) | |
| Sodium Hydoxide | 0.5 |
| TEA | 2.9 |
| Glucose | 10.8 |
| Calcium Lignosulfonate | 36.1 |
| Adicide 50 / Preventol WB (Anti-bacterial) | 0.6 |
| Defoamer | 0.3 |

**Table 2: Composition of the AL-099-2**

| AL-099-2 % weight cement base (dry base) | |
|---|---|
| 31 wt.-% solution of compound (A) in water | 22.6 |
| Glucose | 19.7 |

**Table 3: Composition of the AL-099-3**

| AL-099-3 % weight cement base (dry base) | |
|---|---|
| 31 wt.-% solution of compound (A) in water | 21.4 |
| Glucose | 9.0 |
| Sodium Gluconate | 7.2 |
| Poly 10-5 | 0.4 |

As comparative example, concretes were prepared with the prior art composition **D58** (BASF AG), containing calcium lignosulfonate and sugar (18% calcium lignosulfonate, 38% glucose).

In order to show the robustness of the advantages achieved by the admixtures according to the present invention, concretes were prepared by using different cements (Guadalajara and Zapotiltic). At a further variation, concretes were produced from natural river sand as aggregates or from crushed aggregates. Further, to show the robustness of the advantages achieved by the admixtures according to the present invention, concretes were produced using cement contents above or below 250 kg/m³, i.e. 280 kg/m³ or 225 kg/m³.

Accordingly, 12 concrete compositions have been prepared:
1. GD R B 280 => GD = Guadalajara cement. R = River sand B = BASF admixture 280 = 280 Kg of cement/m³
2. GD R S1 280 => GD = Guadalajara cement. R = River sand. S1 = Sika Solution 1 = AL-099-1 + AL-099-2 280 = 280 Kg of cement/m³
3. GD R S2 280 => GD = Guadalajara cement. R = River sand. S2 = Sika Solution 2 = AL-099-1 + AL-099-3 280 = 280 Kg of cement/m³
4. GD R B 225 => GD = Guadalajara cement. R = River sand B = BASF admixture 225 = 225 Kg of cement/m³
5. GD R S1 225 => GD = Guadalajara cement. R = River sand. S1 = Sika Solution 1 = AL-099-1 + AL-099-2 225 = 225 Kg of cement/m³
6. GD R S2 225 => GD = Guadalajara cement. R = River sand. S2 = Sika Solution 2 = AL-099-1 + AL-099-3 225 = 225 Kg of cement/m³
7. ZA R B 280 => ZA = Zapotiltic cement. R = River sand B = BASF admixture 280 = 280 Kg of cement/m³
8. ZA R S1 280 => ZA = Zapotiltic cement. R = River sand. S1 = Si-ka Solution 1 = AL-099-1 + AL-099-2 280 = 280 Kg of cement/m³
9. ZA R S2 280 => ZA = Zapotiltic cement. R = River sand. S2 = Si-ka Solution 2 = AL-099-1 + AL-099-3 280 = 280 Kg of cement/m³
10. ZA R B 225 => ZA = Zapotiltic cement. R = River sand B = BASF admixture 225 = 225 Kg of cement/m³
11. ZA R S1 225 => ZA = Zapotiltic cement. R = River sand. S1 = Sika Solution 1 = AL-099-1 + AL-099-2 225 = 225 Kg of cement/m³
12. ZA R S2 225 => ZA = Zapotiltic cement. R = River sand. S2 = Sika Solution 2 = AL-099-1 + AL-099-3 225 = 225 Kg of cement/m³_{.}

Table 4 below shows the composition of concretes prepared from Guadalajara cements prepared either by the use of BASF D58 (comparative), or AL-099-1, AL-099-2, AL-099-3 respectively (according to the present invention).

**Table 4**

| **Guadalajara Cement** | | | | |
|---|---|---|---|---|
| **Concrete Mix design** | | **Mix design around 225 Kg/m3** | | |
| | | Example GDRB 225 | Example GDRS 1 225 | Example GDRS 2 225 |
| Brand Name | Unit | BASF | Sika | Sika |
| Admixtures 1 | | D58 | AL-099-1 | AL-099-1 |
| Admixtures 2 | | None | AL-099-2 | AL-099-3 |
| Dosage admixture 1 | CC | 10 | 3,5 | 3,5 |
| Dosage admixture 2 | CC | None | 7,3 | 7,4 |
| **Guadalajara Blended Cement** | **Kg** | **221** | **229** | **230** |
| Water | Kg | 224 | 220 | 221 |
| River Sand | Kg | 819 | 850 | 853 |
| Basaltic Gravel | Kg | 779 | 807 | 810 |
| **Fresh Concrete Results** | | | | |
| Initial Setting time | hh:mm | 07:36 | 07:37 | 07:54 |
| Final Setting time | hh:mm | 08:59 | 09:12 | 09:01 |
| Slump loss | '@ 0 min | 18,0 | 18,0 | 18,5 |
| | '@ 20 min | 15,0 | 11,0 | 10,5 |
| | '@ 40 min | 11,5 | 9,0 | 9,0 |
| Air content (initial) | % | 5,7 | 3,4 | 3,0 |
| **Hardened Concrete Results** | | | | |
| Compressive Strength @ 3 days | Kg/cm2 | 125 | 145 | 146 |
| Compressive Strength @ 7 days | Kg/cm2 | 162 | 188 | 190 |
| Compressive Strength @ 14 days | Kg/cm2 | 217 | 254 | 257 |
| Compressive Strength @ 28 days | Kg/cm2 | 238 | 285 | 285 |

Similarly, further concrete compositions were prepared in an analogous way to the examples shown in Table 4, whereby the amount of Guadalajara cement used for the preparation of the concrete has been increased to 280 kg/m³, as shown in Table 5.

**Table 5**

| **Guadalajara Cement** | | | | |
|---|---|---|---|---|
| **Concrete Mix design** | | **Mix design around 280 Kg/m3** | | |
| | | Example GDRB 280 | Example GDRS 1 280 | Example GDRS 2 280 |
| Brand Name | Unit | BASF | Sika | Sika |
| Admixtures 1 | | D58 | AL-099-1 | AL-099-1 |
| Admixtures 2 | | None | AL-099-2 | AL-099-3 |
| Dosage admixture 1 | cc | 10 | 3,5 | 3,5 |
| Dosage admixture 2 | cc | None | 7,3 | 7,4 |
| **Guadalajara Blended Cement** | **Kg** | **280** | **280** | **280** |
| Water | Kg | 217 | 211 | 210 |
| River Sand | Kg | 811 | 835 | 838 |
| Basaltic Gravel | Kg | 770 | 793 | 796 |
| **Fresh Concrete Results** | | | | |
| Initial Setting time | hh:mm | 07:34 | 08:59 | 09:18 |
| Final Setting time | hh:mm | 09:32 | 10:28 | 10:42 |
| Slump loss | '@ 0 min | 17,0 | 18,0 | 17,0 |
| | '@ 20 min | 9,0 | 7,0 | 7,5 |
| | '@ 40 min | 5,0 | 4,0 | 4,0 |
| Air content (initial) | % | 4,2 | 2,5 | 2,5 |
| **Hardened Concrete Results** | | | | |
| Compressive Strength @ 3 days | Kg/cm2 | 210 | 230 | 235 |
| Compressive Strength @ 7 days | Kg/cm2 | 258 | 283 | 295 |
| Compressive Strength @ 14 days | Kg/cm2 | 309 | 347 | 356 |
| Compressive Strength @ 28 days | Kg/cm2 | 348 | 389 | 397 |

The examples prepared from Zapotiltic cement are shown in Table 6.

**Table 6**

| **Zapotiltic Cement** | | | | |
|---|---|---|---|---|
| **Concrete Mix design** | | **Mix design around 225 Kg/m3** | | |
| | | Example ZARB 225 | Example ZARS 1 225 | Example ZARS 2 225 |
| Admixture Brand Name | Unit | BASF | Sika | Sika |
| Admixtures 1 name | | D58 | AL-099-1 | AL-099-1 |
| Admixtures 2 name | | None | AL-099-2 | AL-099-3 |
| Dosage admixture 1 | cc | 10 | 3,5 | 3,5 |
| Dosage admixture 2 | cc | None | 7,3 | 7,4 |
| **Guadalajara Blended Cement** | **Kg** | **222** | **230** | **231** |
| Water | Kg | 213 | 212 | 214 |
| River Sand | Kg | 824 | 856 | 858 |
| Basaltic Gravel | Kg | 783 | 813 | 815 |
| **Fresh Concrete Results** | | | | |
| Initial Setting time | hh:mm | 06:30 | 06:15 | 07:07 |
| Final Setting time | hh:mm | 07:55 | 07:37 | 08:21 |
| Slump loss | '@ 0 min | 18,5 | 18,0 | 18,5 |
| | '@ 20 min | 12,5 | 10,5 | 11,0 |
| | '@ 40 min | 9,0 | 8,0 | 7,5 |
| Air content (initial) | % | 6,0 | 3,8 | 3,3 |
| **Hardened Concrete Results** | | | | |
| Compressive Strength @ 3 days | Kg/cm2 | 165 | 193 | 194 |
| Compressive Strength @ 7 days | Kg/cm2 | 214 | 248 | 254 |
| Compressive Strength @ 14 days | Kg/cm2 | 249 | 297 | 299 |
| Compressive Strength @ 28 days | Kg/cm2 | 272 | 316 | 324 |

In an analogous way to the cement compositions described in Table 6 above, cement compositions have been prepared with an amount of Zapotiltic cement of 280 kg/m³ as shown in Table 7.

**Table 7**

| **Zapotiltic Cement** | | | | |
|---|---|---|---|---|
| **Concrete Mix design** | | **Mix design around 280 Kg/m3** | | |
| | | Example ZARB 280 | Example ZARS 1 280 | Example ZARS 2 280 |
| Admixture Brand Name | Unit | BASF | Sika | Sika |
| Admixtures 1 name | | D58 | AL-099-1 | AL-099-1 |
| Admixtures 2 name | | None | AL-099-2 | AL-099-3 |
| Dosage admixture 1 | cc | 10 | 3,5 | 3,5 |
| Dosage admixture 2 | cc | None | 7,3 | 7,4 |
| **Zopotiltic Blended Cement** | **Kg** | **280** | **280** | **280** |
| Water | Kg | 212 | 205 | 204 |
| River Sand | Kg | 818 | 843 | 845 |
| Basaltic Gravel | Kg | 777 | 801 | 803 |
| **Fresh Concrete Results** | | | | |
| Initial Setting time | hh:mm | 06:49 | 07:11 | 07:30 |
| Final Setting time | hh:mm | 08:47 | 08:48 | 09:00 |
| Slump loss | '@ 0 min | 18,0 | 18,5 | 18,0 |
| | '@ 20 min | 11,0 | 9,0 | 10,5 |
| | '@ 40 min | 6,0 | 4,5 | 6,0 |
| Air content (initial) | % | 4,0 | 2,5 | 2,5 |
| **Hardened Concrete Results** | | | | |
| Compressive Strength @ 3 days | Kg/cm2 | 254 | 281 | 282 |
| Compressive Strength @ 7 days | Kg/cm2 | 293 | 325 | 327 |
| Compressive Strength @ 14 days | Kg/cm2 | 330 | 376 | 376 |
| Compressive Strength @ 28 days | Kg/cm2 | 368 | 410 | 410 |

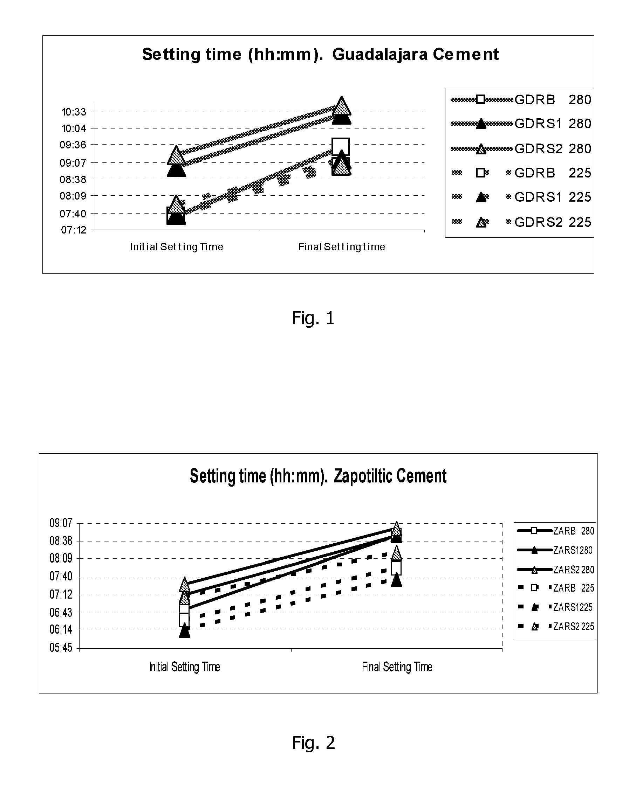

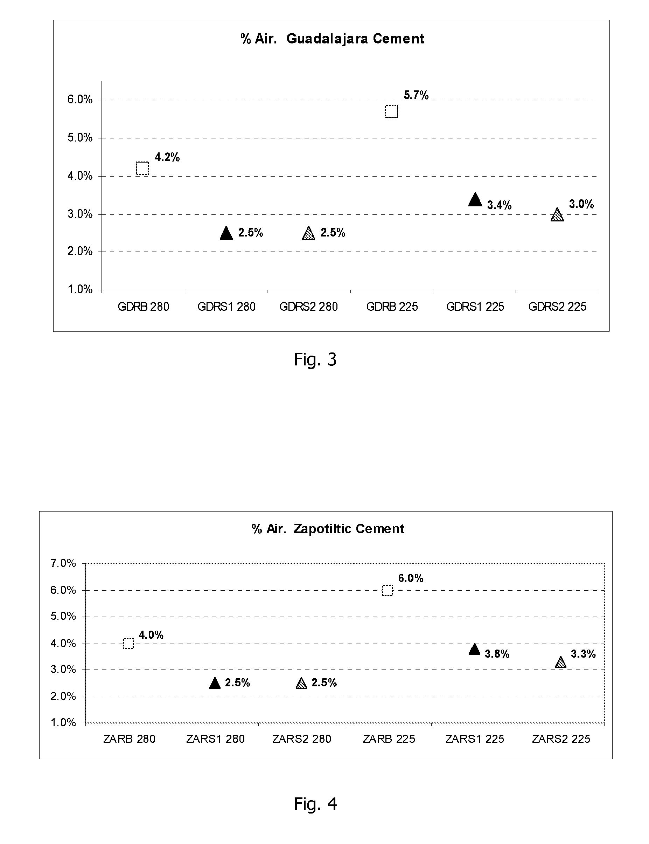

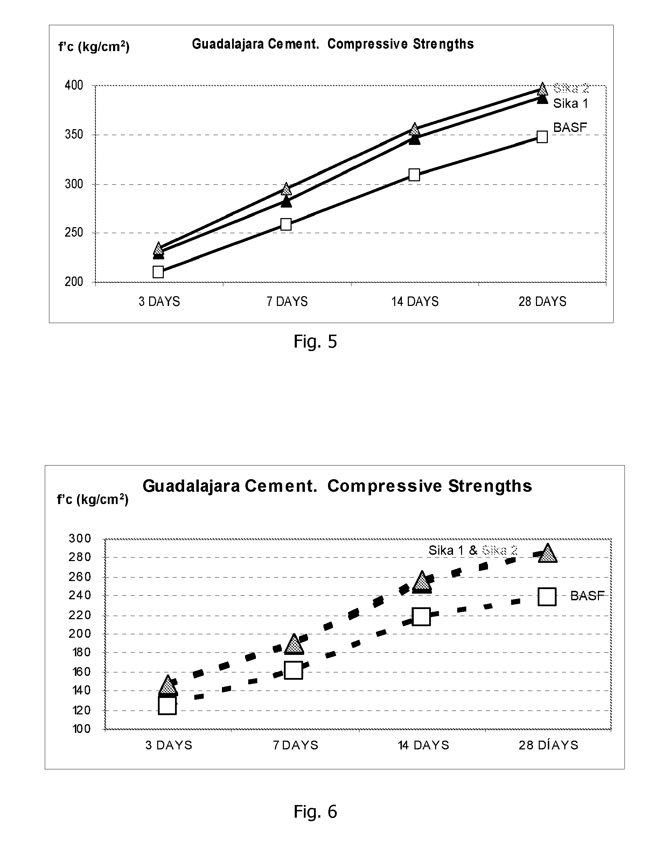

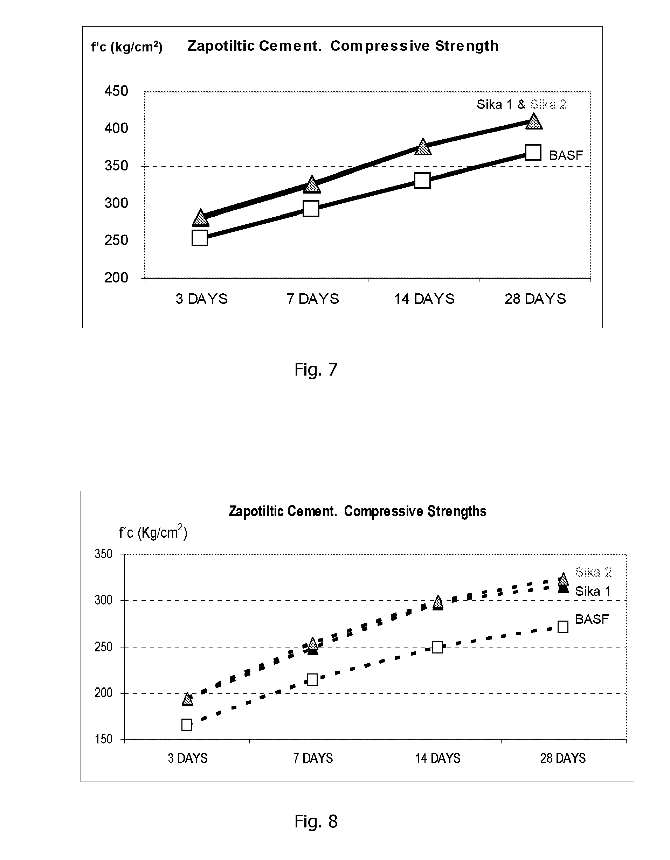

The advantageous properties of the concretes prepared according to the present invention in comparison to concrets prepared by the use of the admixture BASF D58 are further illustrated by the accompying Figures 1 to 8.

As can be seen from the Figures 1 to 8, the concrets prepared by use of the admixtures according to the present invention have a more advantageous initial and final setting time (see Figures 1 and 2), a lower air content (see Figures 3 and 4), and a higher compressive strength after 3, 7 and 14 days (see Figures 5 to 8).

## Claims

1. Water-reducing admixture for concrete, comprising a first composition comprising at least one calcium lignosulfonate;
and a second composition comprising
at least one vinyl-copolymer, and at least one sugar.

2. Water-reducing admixture according to claim 1, whereby the first composition additionally comprise at least one amine, in particular triethanolamine.

3. Water-reducing admixture according to claims 1 or 2, whereby the at least one vinyl-copolymer in the second composition comprises a substantially water soluble linear copolymer of monomeric units selected from vinyl acetate and vinyl alcohol with monomeric units of N-substituted maleamic acid in a molar ratio of 1:1, said copolymer represented by Formular (A) 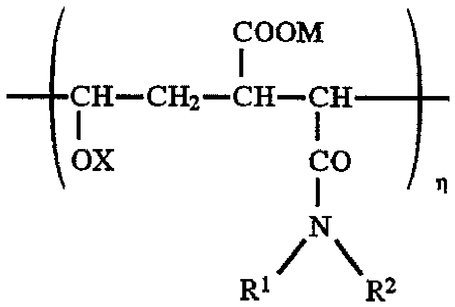 wherein R¹ is hydrogen, R² is an unsubstituted C1 to C4-alkyl residue, a C1 to C10-alkyl residue which comprises an alkali metal carboxylate or alkaline earth metal carboxylate group, or a hydroxyl or amino group, an aromatic residue which comprises carboxylic acid or sulfonic acid groups or alkali metal carboxylate or sulfonate or alkaline earth metal carboxylate or sulfonate groups, or may together with the nitrogen atom to which they bond, form a morpholine ring; X represents a hydrogen atom or the group-COCH₃; and M represents a hydrogen atom, a monovalent or divalent metal ion, or a substituted or unsubstituted ammonium group.

4. Water-reducing admixture according to any of the preceding claims whereby the at least one vinyl-copolymer in the second composition comprises a compound represented by the formula

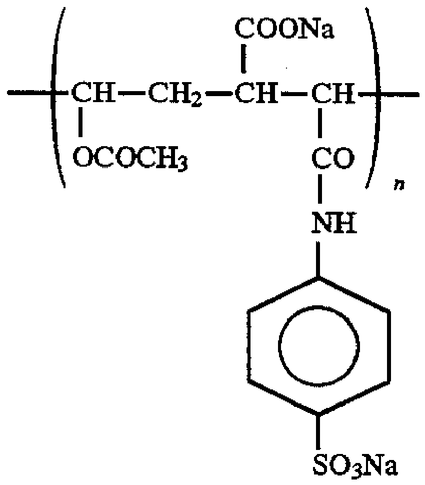

5. Water-reducing admixture according to any of the preceding claims, whereby the first composition additionally comprises at least one sugar, in particular corn-syrup and/or glucose, at least one alkaline compound, in particular sodium hydroxide, at least one preservative, and at least one defoamer.

6. Water reducing admixture according to any of the preceding claims, comprising a first composition comprising about 50 to 100 wt.-% of at least one calcium-ligno-sulfonate, about 0 to 5 wt.-% of at least one amine, in particular triethanolamine,
about 0 to 10 wt.-% of at least one sugar, in particular corn-syrup and/or glucose,
about 0 to 3 wt.-% of at least one alkaline compound, in particular sodium hydroxide
about 0 to 3 wt.-% of at least one preservative, and
about 0 to 3 wt.-% of at least one defoamer; and
a second composition comprising
about 10 to 90 wt.% of at least one vinyl-copolymer, and
about 10 to 90 wt.-% of at least one sugar, in particular glucose.

7. Use of an admixture according to any of the preceding claims for reducing the water consumption in the preparation of a concrete.

8. Use according to claim 7, whereby the concrete is a concrete with a cement content ≤ 250 kg/m³ and a content of fines including swelling clays passing 200 mesh (corresponding to 125 microns) ≥ 2%, based on the weight of the total concrete.

9. Method for preparing a concrete comprising the steps:
admixing a concrete mix with a first aqueous composition comprising water and at least one calcium lignosulfonate; and admixing the mix obtained with a second aqueous composition comprising water, at least one vinyl-copolymer, and at least one sugar.

10. Method according to claim 9, whereby the first aqueous composition comprises 60 to 99 wt.-%, in particular about 80 to 95 wt.-%, of the total amount of water used for preparing the concrete, and the second aqueous composition comprises about 1 to 40 wt.-%, in particular about 5 to 20 wt.-%, of the total amount of water used for preparing the concrete.

11. Method according to claim 9 or 10, whereby the first aqueous composition additionally comprises an amine, in particular triethanolamine.

12. Method according to any of the claims 9 to 11, whereby the at least one vinyl-copolymer in the second aqueous composition comprises a substantially water soluble linear copolymer of monomeric units selected from vinyl acetate and vinyl alcohol with monomeric units of N-substituted maleamic acid in a molar ratio of 1:1, said copolymer represented by Formular (A) 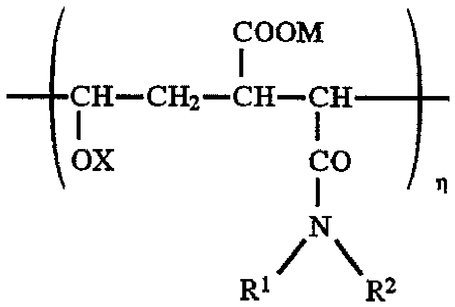 wherein R¹ is hydrogen, R² is an unsubstituted C1 to C4-alkyl residue, a C1 to C10-alkyl residue which comprises an alkali metal carboxylate or alkaline earth metal carboxylate group, or a hydroxyl or amino group, an aromatic residue which comprises carboxylic acid or sulfonic acid groups or alkali metal carboxylate or sulfonate or alkaline earth metal carboxylate or sulfonate groups, or may together with the nitrogen atom to which they bond, form a morpholine ring; X represents a hydrogen atom or the group-COCH₃; and M represents a hydrogen atom, a monovalent or divalent metal ion, or a substituted or unsubstituted ammonium group.

13. Method according to any of the claims 9 to 12, whereby the at least one vinyl-copolymer in the second aqueous composition comprises a compound represented by the formula

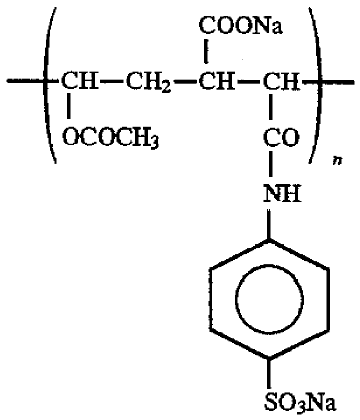

14. Method according to any of the claims 9 to 13, whereby the first aqueous composition additionally comprises at least one sugar, in particular corn-syrup and/or glucose, at least one alkaline compound, in particular sodium hydroxide, at least one preservative, and at least one defoamer.

15. Method according to any of the claims 9 to 14, whereby first aqueous composition comprises
about 50 to 100 parts per weight of at least one calcium lignosulfonate,
about 10 to 50 parts per weight of at least one amine, in particular triethanolamine,
about 0 to 10 parts per weight of at least one sugar, in particular corn-syrup, and/or glucose
about 0 to 3 parts per weight of at least one alkaline compound, in particular sodium hydroxide
about 0 to 3 parts per weight of at least one preservative, and about 0 to 3 parts per weight of at least one defoamer; and
the second aqueous composition comprises
about 10 to 90 parts per weight of at least one vinyl-copolymer, about 10 to 90 parts per weight at least one sugar, in particular glucose.

16. Concrete prepared according to the method according to any of the claims 9 to 15.

17. Concrete according to claim 16, whereby the concrete is a concrete with a cement content ≤ 250 kg/m³ and a content of fines including swelling clays passing 200 mesh (corresponding to 125 microns) ≥ 2 %, based on the weight of the total concrete.
